# DEMANDE DE BREVET EUROPEEN

(11) **EP 1 659 515 A1**
(43) Date de publication de la demande: **24.05.2006**
(21) Numéro de dépôt: 05110922.1
(22) Date de dépôt: 18.11.2005
(51) Int. Cl.: G06F 21/00

(54) **Protection d'un microcontrôleur**

(30) Priorité: 19.11.2004 FR 0452701
(71) Demandeur: PROTON WORLD INTERNATIONAL N.V., 1930 ZAVENTEM (BE)
(72) Inventeur: Modave, Jean-Louis, 1340, OTTIGNIES (BE)
(74) Mandataire: de Beaumont, Michel

(57) **Abrégé**

L'invention concerne un procédé de protection d'au moins une section (1) d'un programme exécuté par un microcontrôleur, consistant : avant le début de l'exécution de ladite section, à décrémenter ou incrémenter au moins un premier compteur (CNT_SCY) et mémoriser son état dans une mémoire non volatile du microcontrôleur ; en cas d'une détection d'une tentative d'attaque par le microcontrôleur, activer un drapeau (FLAG_IN_RAM) en mémoire vive du microcontrôleur ; et en fin d'exécution de ladite section du programme, vérifier l'état du drapeau.

## Description

### Domaine de l'invention

La présente invention concerne, de façon générale, la protection d'informations contenues dans un circuit intégré, par exemple dans une carte à puce ou analogue, avec ou sans contact. L'invention concerne plus particulièrement la protection d'informations sensibles contenues dans un circuit intégré d'une carte à puce ou analogue contre des attaques visant à empêcher l'invalidation de la carte suite à une détection de tentative de fraude.

### Exposé de l'art antérieur

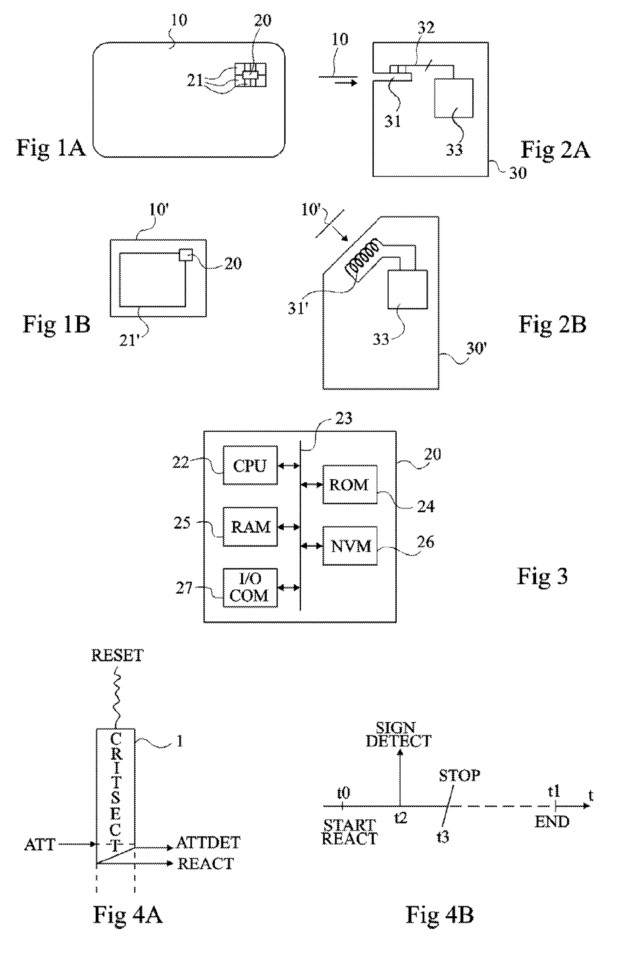

Les figures 1A et 2A représentent, de façon très schématique, un exemple de système de carte à puce 10 (figure 1A) à contacts du type auquel s'applique la présente invention. La carte 10 porte une puce de circuit intégré 20 capable de communiquer avec un terminal 30 (figure 2A) par l'intermédiaire de contacts 21. Lorsque la carte 10 (figure 2A) est introduite dans une fente 31 du terminal, les contacts 21 de la carte 10 entrent en relation électrique avec d'autres contacts 32 du terminal 30 pour communiquer avec un système informatique 33 de ce dernier.

Les figures 1B et 2B représentent de façon très schématique, un exemple de système de carte ou étiquette électronique 10' (figure 1B) sans contact du type auquel s'applique la présente invention. Dans ce cas, la puce 20 de circuit intégré portée par l'étiquette électronique 10' est reliée à une antenne 21' formant l'élément inductif d'un circuit résonnant du transpondeur ainsi constitué. Cette antenne 21' est destinée à communiquer par couplage magnétique proche avec une antenne 31' d'un terminal 30' lorsque l'étiquette 10' (figure 2B) se trouve dans le champ électrique rayonné par l'antenne 31'. L'antenne 31' est connectée à un système informatique 33 du terminal 30'. Le transpondeur électromagnétique 10' peut être porté à une carte à puce, l'antenne étant alors généralement constituée d'un enroulement conducteur plan porté par la carte. Il peut aussi s'agir d'une carte à puce mixte combinant les fonctions de communication avec et sans contact.

La figure 3 représente, de façon très schématique et sous forme de blocs, des éléments d'une puce 20 de circuit intégré du type auquel s'applique la présente invention équipant, par exemple, une carte à puce avec ou sans contact.

Ce circuit intégré 20 constitue un microcontrôleur comprenant une unité centrale de traitement 22 (CPU) communiquant par l'intermédiaire d'un bus 23 avec différentes mémoires, parmi lesquelles au moins une mémoire 24 (ROM), par exemple, une mémoire morte ou une mémoire FLASH, de stockage de programmes à exécuter, une mémoire vive 25 (RAM) utilisée pendant l'exécution des programmes, et une mémoire 26 (NVM) non volatile réinscriptible (par exemple, une mémoire EEPROM). La puce 20 comporte également des ports d'entrée-sortie 27 (I/O COM) vers l'extérieur. Ces ports d'entrée-sortie sont reliés soit à des contacts (par exemple les contacts 21 d'une carte à puce - figure 1A), soit à un élément de transmission sans contact (par exemple, l'antenne 21' d'un transpondeur électromagnétique - figure 1B).

Les figures 4A et 4B illustrent, de façon très schématique, le fonctionnement d'un programme dont au moins une partie traite des informations sensibles (par exemple, une ou plusieurs clés secrètes ou algorithmes de cryptographie) subissant une tentative d'attaque par un pirate visant à obtenir tout ou partie des informations sensibles.

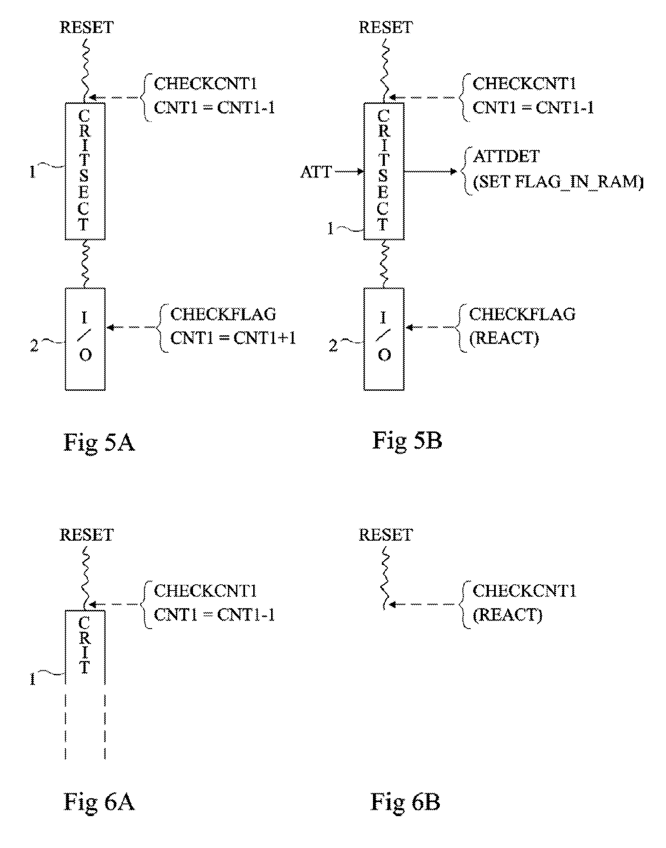

Suite à une réinitialisation (RESET) du microprocesseur du circuit (20, figure 3) de la carte à puce concernée, différents traitements sont mis en oeuvre par son unité centrale selon les applications. On suppose que dans le déroulement de son programme principal (figure 5A), intervient une section dite critique 1 (CRITSECT) traitant des données sensibles (par exemple, clé, code secret ou algorithme) qu'il convient de protéger, c'est-à-dire d'empêcher la sortie de ces informations du composant intégré dans laquelle elles se trouvent. Cela revient à éviter la sortie de données par l'interface d'entrée-sortie (27, figure 3) avec ou sans contact du circuit intégré lorsqu'une perturbation est détectée.

On suppose que, dans le déroulement de la section critique 1, apparaît une attaque ATT provenant d'un fraudeur cherchant à percer le secret de la carte. Une telle attaque peut prendre différentes formes. Par exemple, il peut s'agir d'introduire une perturbation électrique dans le composant de façon à provoquer un saut d'instruction dans le déroulement de la section critique et obtenir ainsi les données. Il peut également s'agir de perturber l'exécution de la section critique par excitation lumineuse ou d'introduire une dérive dans l'horloge du composant. Comme le pirate n'a en principe pas accès au programme exécuté par le composant lui-même, ces attaques entraînent généralement une perturbation physique sur le composant.

De façon classique, les puces de circuit intégré protégées sont capables de détecter une tentative de piratage au sein d'une section critique. Cette détection (ATTDET) d'une attaque peut prendre différentes formes. Par exemple, on sait détecter de façon matérielle une dérive dans l'horloge du composant, l'apparition d'une excitation lumineuse importante ou d'une perturbation électrique sur le circuit intégré. De façon logicielle, l'exécution de la section critique peut être protégée par une vérification périodique du code logiciel à partir d'une clé d'authentification stockée dans une mémoire du circuit intégré. Un tel calcul est généralement appelé calcul de signature pour vérifier l'exécution correcte du code logiciel sans interruption. Dans le cas d'une interruption, la signature n'est pas vérifiée ce qui permet la détection.

Traditionnellement, suite à la détection d'une attaque sur une puce de circuit intégré, il convient d'empêcher la sortie de données de la carte. Pour cela, le programme de traitement de la détection de perturbation engendre une action (REACT) de blocage de la carte. Cette action se traduit généralement par l'écriture ou l'effacement d'un ou plusieurs bits dans une mémoire non volatile réinscriptible (26, figure 3), par exemple de type EEPROM ou FLASH. L'objet de cette action est d'invalider tout fonctionnement ultérieur de la puce de façon à empêcher le pirate de répéter son attaque. En effet, une attaque doit être répétée plusieurs fois sur un même composant pour permettre de percer le secret d'un circuit intégré. Cette répétition et l'analyse des résultats fournis suite aux interruptions sont généralement traitées de façon statistique sur la base d'hypothèses faites par le pirate pour percer le secret du circuit.

Un problème qui se pose est que cette action (REACT) se traduit généralement par une forte signature électrique du composant (consommation plus importante du circuit intégré), ce qui permet au pirate de détecter la tentative d'écriture en mémoire non volatile au cours de la section critique. Une telle signature détectable permet au pirate d'interrompre brusquement l'alimentation du circuit intégré et plus généralement la fourniture à celui-ci de tout signal lui permettant de poursuivre son exécution logicielle. Le pirate empêche ainsi le blocage de la carte ce qui lui permet de répéter son attaque telle qu'illustrée en figure 4A. Il répète l'attaque, éventuellement en modifiant un ou plusieurs paramètres, jusqu'à ce qu'il parvienne à ce que l'une d'elles ne soit pas détectée et que des données soient alors fournies par le circuit.

La figure 4B illustre, sous la forme d'un chronogramme très schématique, une telle réaction d'un fraudeur suite à une tentative de blocage du circuit intégré.

Quelle que soit l'action entreprise par la carte, cette action va prendre un certain temps avant de parvenir au blocage. L'exemple de la figure 4B illustre la durée d'une commande par exemple en écriture dans une mémoire EEPROM commençant à un instant t0 (START REACT) pour se terminer en principe à un instant t1 (END).

Un pirate, sachant que ses attaques sont susceptibles d'être détectées par la carte à puce, surveille la signature électrique de la carte afin de détecter une variation importante dans l'exécution d'une section critique (SIGN DETECT). Par exemple, cette détection intervient à un instant t2 avant la fin de l'exécution de la commande par la carte. Suite à cette détection, le fraudeur arrête quasi immédiatement (instant t3, STOP) tout fonctionnement de la carte de façon à empêcher le blocage de parvenir à son terme.

Bien entendu, ces actions sont en pratique effectuées de façon automatique par un outil programmé à cette fin, ce qui permet une réaction rapide. Dans le cas d'une carte à puce à contacts, cela revient à interrompre brusquement tous les contacts entre la carte 10 (figure 1A) et son lecteur 30 (figure 2A) de façon à la priver de toute alimentation et signal d'horloge. Dans le cas d'une carte sans contact 10' (figure 1B), cela revient à une suppression immédiate de tout signal radiofréquence émis par le lecteur 30' (figure 2B) privant la carte d'alimentation et d'horloge.

La présente invention sera décrite par la suite en relation avec un exemple d'application aux cartes à puce à contacts. On notera toutefois qu'elle s'applique plus généralement non seulement aux cartes à puce sans contact mais également à n'importe quel élément électronique contenant un microcontrôleur intégrant une ou plusieurs mémoires susceptibles de contenir des informations que l'on souhaite protéger contre des tentatives de piratage par répétition d'attaques et actions visant à empêcher le blocage du circuit intégré par détection d'une signature électrique de celui-ci.

### Résumé de l'invention

La présente invention vise à palier les inconvénients des microcontrôleurs connus et, plus particulièrement, à protéger les informations sensibles contenues dans un tel microcontrôleur suite à la détection d'une tentative d'attaque par interruption du programme pour obtenir ces données sur les ports d'entrée-sortie du microcontrôleur.

La présente invention vise également à protéger l'exécution d'un programme, suite à la détection d'erreurs dans le séquencement du programme, notamment par injection de faute lors de son exécution.

La présente invention vise également à proposer une solution compatible avec une exécution sur un microcontrôleur d'une carte à puce ou d'une étiquette électronique.

Pour atteindre tout ou partie de ces objets ainsi que d'autres, la présente invention prévoit un procédé de protection d'au moins une section d'un programme exécuté par un microcontrôleur (20), consistant :
avant le début de l'exécution de ladite section, à décrémenter ou incrémenter au moins un premier compteur et mémoriser son état dans une mémoire non volatile du microcontrôleur ;
en cas d'une détection d'une tentative d'attaque par le microcontrôleur, activer un drapeau en mémoire vive du microcontrôleur ; et
en fin d'exécution de ladite section du programme, vérifier l'état du drapeau.

Selon un mode de mise en oeuvre de la présente invention, l'état du premier compteur est vérifié par rapport à un premier seuil avant l'exécution de ladite section de façon à mettre en oeuvre une réaction de protection en cas de dépassement du seuil.

Selon un mode de mise en oeuvre de la présente invention, ladite vérification est également effectuée avant fourniture d'informations en entrée-sortie du microcontrôleur.

Selon un mode de mise en oeuvre de la présente invention, un deuxième compteur est décrémenté ou incrémenté si ledit drapeau en mémoire vive se trouve en fin de section critique non activé.

Selon un mode de mise en oeuvre de la présente invention, le deuxième compteur est testé par rapport à un deuxième seuil avant exécution de la section.

Selon un mode de mise en oeuvre de la présente invention, le deuxième compteur est incrémenté en fin d'exécution de ladite section.

Selon un mode de mise en oeuvre de la présente invention, l'état initial du premier compteur est fixé à une valeur choisie aléatoirement dans une plage.

Selon un mode de mise en oeuvre de la présente invention, ledit seuil est fixé à une valeur choisie aléatoirement dans une plage.

La présente invention prévoit également un microcontrôleur comprenant au moins une unité centrale, une mémoire vive, une mémoire non volatile et un port d'entrée-sortie, au moins une zone de la mémoire non volatile étant destinée au stockage de l'état d'au moins un premier compteur pour la mise en oeuvre du procédé de protection d'au moins une section d'un programme.

Selon un mode de réalisation de la présente invention, au moins une zone de la mémoire vive est destinée au stockage d'un drapeau indicateur d'une détection d'une éventuelle attaque.

### Brève description des dessins

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
les figures 1A et 1B qui ont été décrites précédemment représentent de façon très schématique, deux exemples de microcontrôleurs du type auquel s'applique la présente invention ;
les figures 2A et 2B qui ont été décrites précédemment représentent deux exemples de terminaux du type auquel s'applique la présente invention ;
la figure 3 qui a été décrite précédemment représente, de façon très schématique et sous forme de blocs, un exemple de microcontrôleur contenu dans un élément électronique du type auquel s'applique la présente invention ;
les figures 4A et 4B qui ont été décrites précédemment sont destinées à exposer l'état de la technique et le problème posé ;
les figures 5A et 5B illustrent, de façon très schématique et respectivement sans attaque et en cas d'attaque, un premier mode de mise en oeuvre du procédé selon la présente invention ;
les figures 6A et 6B illustrent une variante de mise en oeuvre du procédé de l'invention, respectivement dans les fonctionnements des figures 5A et 5B ; et
la figure 7 représente un organigramme simplifié d'un mode de mise en oeuvre du procédé de protection selon un mode de mise en oeuvre préféré de la présente invention.

### Description détaillée

Les mêmes éléments ont été désignés par les mêmes références aux différentes figures. Pour des raisons de clarté, seuls les étapes et éléments qui sont utiles à la compréhension de l'invention ont été représentés aux figures et seront décrits par la suite. En particulier, les différents programmes exécutés par le microcontrôleur auxquels s'applique la présente invention qu'il s'agisse de programmes mettant en oeuvre des données sensibles ou non n'ont pas été détaillés, l'invention s'appliquant quelle que soit l'application du microcontrôleur et les programmes qu'il exécute. De plus, les constitutions respectives des microcontrôleurs et des lecteurs de cartes ou de transpondeurs n'ont pas été détaillées, l'invention étant là encore compatible avec tout système de cartes à puce avec ou sans contact classique, pourvu que ces cartes à puce soient à microcontrôleur.

Selon un mode de mise en oeuvre de la présente invention, lorsqu'une attaque par injection de faute dans une section critique du point de vue de la sécurité de données contenues dans le microcontrôleur est détectée par celui-ci, cela n'engendre pas de tentative de blocage immédiat de la carte par une action de type écriture en mémoire non volatile (EEPROM ou FLASH). Lors d'une telle détection, le microcontrôleur provoque l'écriture d'un bit ou d'un mot de type drapeau (flag) en mémoire vive et poursuit le traitement de la section critique comme si rien ne s'était passé.

L'écriture d'un drapeau en mémoire vive n'est pas détectable par le pirate éventuel. En effet, lors de l'exécution de toute partie d'un programme et y compris d'une section critique, de nombreux accès en mémoire vive ont lieu pour stockage temporaire de données ou de portion de code. La signature électrique du composant n'est pas modifiée de façon significative par l'écriture d'un drapeau servant à la protection prévue par l'invention.

Par la suite, en fin de section critique et avant l'exécution du sous-programme d'entrée-sortie ou au début de ce sous-programme, l'état du drapeau est testé de façon à prendre les éventuelles mesures nécessaires avant d'autoriser la sortie de données ou d'informations vers l'extérieur du microcontrôleur.

De préférence, l'action entreprise par le microcontrôleur suite à un état actif du drapeau, qui peut prendre la forme de toute réaction classique à une tentative de piratage comme l'effacement d'une zone de mémoire non volatile ou l'écriture d'un drapeau de blocage en mémoire EEPROM, est masquée par une mise à jour d'au moins un compteur effectuée en mémoire non volatile de façon systématique qu'une attaque ait ou non eu lieu.

Les figures 5A et 5B illustrent, de façon très schématique, un exemple de déroulement d'un programme par un microcontrôleur selon un premier mode de mise en oeuvre de la présente invention, respectivement sans tentative d'attaque et avec détection d'une tentative d'attaque dans une section critique du programme.

Comme précédemment, un traitement algorithmique dans un microcontrôleur commence généralement par une réinitialisation (RESET) qui suit, par exemple, l'introduction d'une carte à puce dans un lecteur à contacts.

Selon ce premier mode de mise en oeuvre, avant le début d'une section critique (bloc 1, CRITSECT) le programme de protection vérifie l'état d'un compteur CNT1 (CHECKCNT1) stocké en mémoire non volatile (26, figure 3). Si l'état de ce compteur est conforme à un état attendu comme on le verra par la suite en relation avec les figures 6A et 6B, le compteur est, par exemple, décrémenté (CNT1 = CNT1-1) et l'exécution de la section critique débute.

En figure 5A, on suppose un déroulement normal de la section critique tandis qu'en figure 5B on suppose la présence d'une attaque ATT par injection de faute dans l'exécution de l'algorithme et une détection ATTDET de cette attaque par le microcontrôleur. Suite à cette détection, le microcontrôleur modifie, en mémoire vive, l'état d'un drapeau FLAG_IN_RAM (SET FLAG_IN_RAM) et laisse l'exécution de la section critique 1 aller jusqu'à son terme. Ainsi, pour le pirate éventuel, tout se passe comme si son attaque n'avait pas été détectée.

En fin de section critique 1, l'exécution du programme se poursuit normalement jusqu'à l'exécution d'un sous-programme d'entrée-sortie (bloc 2, I/O) au cours duquel des données sont censées être extraites du microcontrôleur. Dans cette routine d'entrée-sortie, et avant que des données aient été fournies sur les ports d'entrée-sortie (27, figure 3) du microcontrôleur, on prévoit un test de l'état du drapeau de protection (CHECKFLAG). Si l'état de ce drapeau indique une absence de détection d'attaque, le compteur CTN1 est incrémenté (CNT1 = CNT1+1) et le sous-programme d'entrée-sortie se poursuit normalement. Par contre, si l'état du drapeau en mémoire vive indique la détection d'une attaque, l'écriture du nouvel état du compteur est remplacée par une action (REACT) à la tentative de piratage.

On voit déjà que, comme l'état du compteur CNT1 est préférentiellement stocké en mémoire non volatile, sa mise à jour engendre une signature électrique de même nature que l'écriture d'un bit de blocage en mémoire EEPROM ou l'effacement d'une zone d'une mémoire flash en réaction à une tentative de piratage.

Il peut toutefois subsister un risque que le fraudeur empêche l'écriture en mémoire non volatile lors du sous-programme d'entrée-sortie. C'est pourquoi, selon un mode de mise en oeuvre préféré, l'état du compteur est vérifié avant de démarrer la section critique 1.

Les figures 6A et 6B illustrent un redémarrage ultérieur du microcontrôleur respectivement en l'absence de tentative de piratage à l'exécution précédente (figure 5A) et en présence d'une attaque détectée à cette exécution précédente (figure 5B) .

Dans le premier cas, la vérification CHECKCNT1 de l'état du compteur CNT1 est conforme à ce qui est attendu, celui-ci ayant été respectivement décrémenté puis incrémenté lors de l'exécution précédente, son contenu reste à une valeur susceptible d'être testée à la manière d'un seuil. Comme l'état du compteur est correct, celui-ci est de nouveau décrémenté CNT1 = CNT1-1 avant l'exécution suivante de la section critique 1, comme cela est illustré en figure 5A.

Dans le cas où une attaque a été détectée et où une réaction REACT n'a pas pu être menée à terme par le programme d'entrée-sortie, par exemple sous l'effet d'un arrêt brusque de toute alimentation par le fraudeur suite à la détection de tentative d'écriture en mémoire non volatile, la vérification de l'état du compteur CHEKCNT1 conduit à une détection de problème. En effet, celui-ci n'ayant pas été incrémenté à l'exécution précédente. Le programme de protection provoque alors la réaction REACT qui n'a pas été menée à terme à l'exécution précédente.

Si le pirate tente de nouveau d'éviter la réaction REACT suite à une détection de la signature électrique de l'action prise par l'algorithme de protection, cela n'est pas gênant dans la mesure où il arrête alors toute exécution par le microcontrôleur et n'accède donc pas à la section critique. Par conséquent, au pire, celui-ci n'accèdera qu'une seule fois à la section critique. Même si des données ont été fournies à la première exécution, ce n'est généralement pas un problème dans la mesure où il faut plusieurs exécutions pour percer le secret des données sensibles contenues dans un microcontrôleur.

De préférence, l'état que doit respecter le compteur de protection CNT1 est différent d'un microcontrôleur à un autre de façon à éviter des attaques successives sur la base de plusieurs cartes à puce. Par exemple, ce compteur (ou le seuil de détection d'un problème) est fixé à une valeur comprise dans une plage, cette valeur étant tirée aléatoirement dans cette plage. Une telle initialisation du compteur s'effectue, par exemple, lors de la fabrication ou lors d'une première utilisation du microcontrôleur.

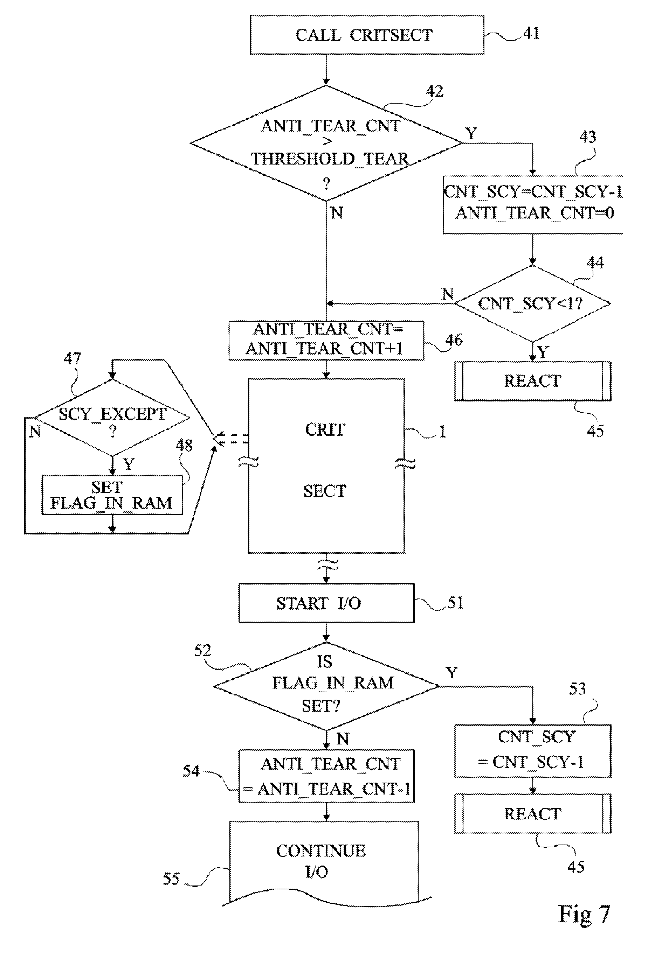

La figure 7 représente un organigramme illustrant un deuxième mode de mise en oeuvre préféré de la présente invention.

Selon ce mode de réalisation, deux compteurs sont utilisés et sont comparés par rapport à des seuils pour conditionner la détection d'une tentative de fraude. L'utilisation de deux compteurs permet, entre autres, d'éviter un blocage du microcontrôleur suite à une fausse détection par exemple en cas de disfonctionnement accidentel du lecteur qui serait détecté comme une tentative de fraude. Les états des compteurs sont, de préférence, stockés en mémoire non volatile (26, figure 3) du microcontrôleur.

Selon ce mode de mise en oeuvre, un premier compteur CNT_SCY est initialisé à une valeur tirée aléatoirement dans une plage (par exemple, entre 1 et 16). Un deuxième compteur ANTI_TEAR_CNT est initialisé à 0 et un seuil THRESHOLD_TEAR est tiré aléatoirement dans une plage (par exemple, entre 1 et 16) par le microcontrôleur et mémorisé en mémoire non volatile.

L'organigramme de la figure 7 démarre par l'appel à la fonction critique à protéger (bloc 41, CALL CRITSECT). Avant l'exécution de la section critique proprement dite, on teste (bloc 42, ANTI_TEAR_CNT > THRESHOLD_TEAR ?) l'état du compteur ANTI_TEAR_CNT par rapport au seuil THRESHOLD_TEAR.

Si le seuil est dépassé (sortie Y du bloc 42), le deuxième compteur CNT_SCY est décrémenté et le compteur ANTI_TEAR_CNT est réinitialisé à 0 (bloc 43 CNT_SCY = CNT_SCY-1 ANTI_TEAR_CNT=0). Puis, l'état du premier compteur est testé (bloc 44, CNT_SCY < 1 ?) par rapport à un seuil, par exemple égal à 1. Si le compte du compteur CNT_SCY est nul (sortie Y du bloc 44), le programme de protection entame un sous-programme de réaction adapté (bloc 45, REACT), par exemple un blocage de la puce par écriture dans sa mémoire non volatile. Dans le cas contraire (sortie N du bloc 44), on revient à la branche principale du programme de protection correspondant à la sortie N du bloc 42.

Le test 42 revient à autoriser un certain nombre d'interruptions de la section critique avant de déclancher la réaction REACT.

Le test 44 correspond à la sécurité pour le cas où le pirate empêche l'action REACT en fin de programme.

Le compteur ANTI_TEAR_CNT est alors incrémenté de 1 (bloc 46, ANTI_TEAR_CNT = ANTI_TEAR_CNT +1). Puis, la section critique 1 est exécutée de façon normale si ce n'est qu'à la détection d'une tentative d'attaque, dite aussi exception de sécurité SCY_EXEPT, le drapeau en mémoire vive FLAG_IN_RAM est activé (blocs 47, SCY_EXEPT ? et bloc 48, SET FLAG_IN_RAM).

A la fin de l'exécution de la section critique, le programme se poursuit normalement jusqu'au début du sous-programme d'entrée-sortie (bloc 51, START I/O).

Selon ce mode de mise en oeuvre préféré de l'invention, au début de cette routine, le programme teste l'état du drapeau FLAG_IN_RAM (bloc 52, IS FLAG_IN_RAM SET ?). Si le drapeau est actif, (sortie Y du bloc 52), cela signifie qu'une tentative d'attaque a été détectée, le compteur CNT_SCY est alors décrémenté de 1 (bloc 53, CNT_SCY = CNT_SCY -1) et le programme de protection engendre une réaction au piratage (bloc 45, REACT). Si cette action échoue, elle sera retentée à l'exécution suivante en début de programme. Si le drapeau FLAG_IN_RAM est resté inactif (sortie N du bloc 52), le compteur ANTI_TEAR_CNT est décrémenté (bloc 54, ANTI_TEAR_CNT = ANTI_TEAR_CNT-1) et le programme d'entrée-sortie de fourniture des données à l'extérieur du microcontrôleur se poursuit normalement (bloc 55, CONTINUE I/O).

Le mode de mise en oeuvre de la figure 8 améliore encore la sécurité par rapport au premier mode de mise en oeuvre dans la mesure où il tient compte d'éventuelles fausses détections et accroît la possibilité de bloquer le composant à différents endroits du processus. En fait, en début de programme, la protection ne se trouve réellement activée qu'après un test des deux compteurs, ce qui permet de s'assurer que le seul compteur ANTI_TEAR_CNT n'est pas dans un état interdit de façon accidentelle.

L'action prise par le microcontrôleur suite à une détection de fraude peut être un blocage définitif du composant ou un blocage temporaire jusqu'à une réinitialisation, ou toute autre action prise classiquement dans une situation de détection de fraude.

Bien entendu, la présente invention est susceptible de diverses variantes et modifications qui apparaîtront à l'homme de l'art. En particulier, bien que l'invention ait été décrite plus particulièrement en relation avec une carte à puce à contacts, celle-ci s'applique plus généralement à tout microcontrôleur intégrant au moins une mémoire vive et une mémoire non volatile et pour lequel on souhaite protéger la sortie d'informations sensibles qu'il contient.

De plus, les pas d'incrément du ou des compteurs pourront être différents de leurs pas de décrément.

En outre, la mise en oeuvre pratique de l'invention, y compris la mise à jour en mémoire non volatile des différents compteurs utilisés, est à la portée de l'homme du métier à partir des indications fonctionnelles données ci-dessus.

## Revendications

1. Procédé de protection d'au moins une section (1) d'un programme exécuté par un microcontrôleur (20), **caractérisé en ce qu'**il consiste :
avant le début de l'exécution de ladite section, à décrémenter ou incrémenter au moins un premier compteur (CNT1 ; CNT_SCY) et mémoriser son état dans une mémoire non volatile (26) du microcontrôleur ;
en cas d'une détection d'une tentative d'attaque par le microcontrôleur, activer un drapeau (FLAG_IN_RAM) en mémoire vive du microcontrôleur ; et
en fin d'exécution de ladite section du programme, vérifier l'état du drapeau.

2. Procédé selon la revendication 1, dans lequel l'état du premier compteur (CNT1) est vérifié par rapport à un premier seuil avant l'exécution de ladite section (1) de façon à mettre en oeuvre une réaction de protection en cas de dépassement du seuil.

3. Procédé selon la revendication 2, dans lequel ladite vérification est également effectuée avant fourniture d'informations en entrée-sortie du microcontrôleur.

4. Procédé selon la revendication 1, dans lequel un deuxième compteur (ANTI_TEAR_CNT) est décrémenté ou incrémenté si ledit drapeau (FLAG_IN_RAM) en mémoire vive se trouve en fin de section critique (1) non activé.

5. Procédé selon la revendication 4, dans lequel le deuxième compteur est testé par rapport à un deuxième seuil avant exécution de la section.

6. Procédé selon la revendication 4, dans lequel le deuxième compteur est incrémenté en fin d'exécution de ladite section.

7. Procédé selon la revendication 1, dans lequel l'état initial du premier compteur est fixé à une valeur choisie aléatoirement dans une plage.

8. Procédé selon la revendication 2, dans lequel ledit seuil est fixé à une valeur choisie aléatoirement dans une plage.

9. Microcontrôleur (20) comprenant au moins une unité centrale (22), une mémoire vive (25), une mémoire non volatile (26) et un port d'entrée-sortie (27), **caractérisé en ce qu'**au moins une zone de la mémoire non volatile est destinée au stockage de l'état d'au moins un premier compteur pour la mise en oeuvre du procédé selon l'une quelconque des revendications 1 à 8.

10. Microcontrôleur selon la revendication 9, dans lequel au moins une zone de la mémoire vive (25) est destinée au stockage d'un drapeau indicateur d'une détection d'une éventuelle attaque pour la mise en oeuvre du procédé de protection selon l'une quelconque des revendications 1 à 8.
